# EUROPEAN PATENT SPECIFICATION

(11) **EP 3 828 615 B1**
(45) Date of publication and mention of the grant of the patent: **04.03.2026**
(21) Application number: 20209921.4
(22) Date of filing: 25.11.2020
(51) Int. Cl.: G02B 21/00, G02B 21/14, G02B 27/58, G02B 21/16

(54) **DIFFERENTIAL PHASE CONTRAST MICROSCOPE**
DIFFERENTIALPHASENKONTRASTMIKROSKOP
MICROSCOPE À CONTRASTE DE PHASE DIFFÉRENTIEL

(30) Priority: 26.11.2019 GB 201917170
(43) Date of publication of application: 02.06.2021
(73) Proprietor: Andor Technology Limited, Belfast County Antrim BT12 7AL (GB)
(72) Inventor: PATTISON, Allister, Ballynure, County Antrim BT39 9GN (GB)
(74) Representative: FRKelly

(56) References cited:
- WO-A1-2018/104536
- DE-T5- 112015 003 924
- US-A1- 2019 196 166

## Description

### Field of the Invention

The present invention relates to optical microscopes. The invention relates particularly to optical microscopes that support differential phase contrast microscopy.

### Background to the Invention

Differential phase contrast (DPC) is an optical microscopy method that enhances contrast in otherwise low contrast samples, or specimens. A circular aperture is placed at a pupil plane, and the specimen is illuminated in accordance with a phase shifting illumination sequence by a light source that is split into symmetrical halves. Local phase gradients within the specimen cause incident light to be diffracted in proportion to the steepness of the local gradient. Phase-to-amplitude conversion is performed whereby incident light encountering local phase gradients is diffracted such that it is blocked at a pupil plane aperture, and undiffracted light passes through the aperture. The amplitude modulated signal is recovered by subtracting the two images taken in a sequential illumination sequence.

Examples of differential phase contrast (DPC) microscopes can be found in the following references: "Differential phase contrast in scanning optical microscopy" by Hamilton et al., Journal of Microscopy, Vol. 133, Pt 1, Jan 1984, pp. 27-39; and "Quantitative differential phase contrast imaging in an LED array microscope" by Waller et al., Optics Express, Vol. 23, No. 9, Apr 2015.

Conventional phase contrast microscopy requires dedicated higher cost objectives with embedded phase plates at their Back Focal Planes (BFP). In addition, a motorised stage is required at the phase-plate conjugate plane of the condenser turret to switch illumination to match different objectives. The disadvantages of such systems are cost and restricted user access due to the short focal lengths of conventional condensers.

Using DPC, a pupil plane filter has to be implemented. In the above-identified references, this filtering is performed by a microscope objective. However, this is not a practical implementation because a common user requirement is for phase contrast imaging in micro-titre, aka "multi-well", plates. The depth and lateral dimensions of the wells in these plates restricts the range of illumination angles that are available for diffraction by the specimen. As illumination light at this reduced set of angles represents a reduced proportion of the area of the pupil plane of a standard objective, the efficiency of phase-to-amplitude conversion by a standard objective is significantly reduced such that only very high phase gradients can be detected (reduced contrast).

Also, a default user requirement is to have access to a range of magnifications with a range of user selected numerical apertures (NAs). Pupil size at the objective back aperture varies with the objective focal length (inversely related to magnification) and NA. For users to access DPC for a range of objectives, the pupil plane filter further needs to be adapted to any magnification/NA combination selected.

It would be desirable to provide a microscope that mitigates at least some of the problems outlined above.

German patent application DE112015003924 discloses an optical scanning microscope with phase modulation elements. US patent application US 2019/196166 discloses a super-resolution microscope that irradiates a sample with illumination beams of different wavelengths that overlap spatially and temporally. International PCT application WO 2018/104536 discloses a confocal microscope that includes a diffractive optical element for producing a geometric flux of the illumination beam path.

### Summary of the Invention

The invention provides a microscope as claimed in claim 1. The microscope is for imaging an object located in an object plane, the microscope comprising:
an illumination source;
an imaging optical system configured to image said object along an optical path to an imaging device, wherein said imaging optical system comprises:
   an infinity-corrected microscope objective and a tube lens;
   at least one lens configured to image a back focal plane of said microscope objective to a conjugate back focal plane outside of said microscope objective;
   an aperture stop located at said conjugate back focal plane and intersecting said optical path,
wherein said object plane is located between said objective and said illumination source,
and wherein said illumination source is configurable to illuminate said object from any one of a plurality of locations that are angularly displaced about an axis that is perpendicular to the object plane, wherein said aperture stop defines an aperture and is operable to adjust the size of the aperture.

In preferred embodiments, said microscope objective and said tube lens are configured to image said object to an intermediate image plane, and wherein said at least one lens comprises an optical relay configured to project an image of said object from said intermediate image plane to said imaging device, and to image said back focal plane of said objective to said conjugate back focal plane. Said optical relay may comprise first and second relay lenses spaced apart along the optical path, said first relay lens being configured to image said back focal plane of said objective to said conjugate back focal plane, the conjugate back focal plane being located between said first and second relay lenses. The conjugate back focal plane may be located one focal length from each of the first and second relay lenses. Said first relay lens may be located at least one focal length away from said intermediate image plane.

In preferred embodiments, said illumination source is operable to illuminate said object using a sequence of two or more illumination configurations, wherein in each illumination configuration said illumination source illuminates said object from a respective different illumination angle. The preferred illumination source is configured to illuminate the object obliquely with respect to the object plane, the illumination angles being angularly displaced from one another about an axis that is perpendicular to the object plane. The preferred sequence of illumination configurations comprises one or more pair of illumination configurations, wherein the illumination configurations of each pair are used in sequence and cause the illumination source to illuminate said object from a respective illumination angle that is angularly displaced by 180° with respect to each other.

In preferred embodiments, said illumination source has a spatially partitionable illumination field for illuminating said object from different angles with respect to the object plane.

Preferably, the illumination source has an illumination field and comprises an array of light sources that are controllable individually, and/or as two or more groups, in order to selectively illuminate one or more of a plurality of zones of the illumination field.

Preferably, the illumination source has an illumination field and is operable to illuminate said object using a sequence of spatially displaced zones of the illumination field. Said sequence of spatially displaced zones preferably comprises at least one pair of zones that are angularly displaced from each other by 180° about the centre of the illumination field.

Advantageously, said illumination source is located at a distance from said object plane that corresponds with, or substantially corresponds with, optical infinity.

In preferred embodiments the microscope includes means for adjusting the distance between said illumination source and said object plane.

Optionally, the microscope includes an irradiation optical system comprising a light source and being configured to irradiate said object by directing light from said light source to the object along at least part of said optical path, preferably through said objective. Said irradiation optical system may comprise a confocal spinning disk, and said light source comprises at least one laser device arranged to direct a laser beam onto said confocal spinning disk, and wherein said confocal spinning disk is movable between a use state in which it intersects said optical path, and a non-use state in which it does not intersect said optical path. In said use state, said confocal spinning disk is preferably located in said intermediate image plane. Preferably, the microscope further includes a conveyancing mechanism for moving said confocal spinning disk between said use state and said non-use state. The confocal spinning disk may be included in a spinning disk assembly, said spinning disk assembly being movable between said use state and said non-use state. Said light source may be arranged to direct said light to said optical path via a beam splitter located between the tube lens and the optical relay, the beam splitter being arranged to direct light from the tube lens to the optical relay.

Advantageously, said aperture stop is configured to act as a spatial filter, preferably a pupil plane spatial filter. The aperture preferably has a size that is less than or equal to the size of a pupil projected from the back focal plane and imaged to the conjugate back focal plane.

In preferred embodiments, said aperture stop comprises an iris device defining said aperture and is preferably operable to adjust the size of the aperture. Said iris device may be located in said conjugate plane of the back focal plane of said objective, and is positioned such that the aperture intersects said optical path.

Preferred embodiments of the invention include a configurable, or split, illumination source positioned to obliquely illuminate the object, and which may be placed at a working distance from the object to allow the user unrestricted access to the specimen area. Advantageously, the microscope may use a standard objective, which reduces cost. In preferred embodiments a pupil plane spatial filter located at a conjugate plane of the objective back-focal-plane. The size of the pupil plane filter may be selected to match the illumination-angle constraints in embodiments where the object is provided in a multi-well plate. Advantageously, the size of the pupil plane filter is adaptable to suit the NA and magnification combination of user selected objective choices.

### Brief Description of the Drawings

An embodiment of the invention is now described by way of example and with reference to the accompanying drawings in which like numerals are used to denote like parts and in which:

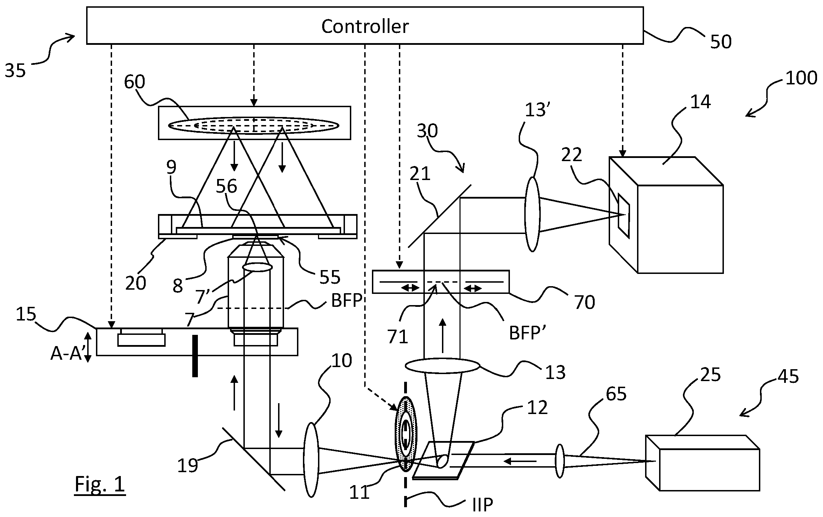

Figure 1 is a schematic view of a microscope embodying the invention;
Figure 2 is a schematic view of a multi-zone configurable light source suitable for use with embodiments of the invention;
Figure 3A is an illustration of a preferred multi-zone configurable light source suitable for use with embodiments of the invention, the device being shown implementing brightfield illumination;
Figure 3B shows the light source of Figure 3A implementing eight angularly displaced semi-circular split illuminations;
Figure 3C shows the light source of Figure 3A implementing eight angularly displaced semi-annular split illuminations;
Figure 4 is an end view of a variable iris assembly being part of the microscope of Figure 1;
Figure 5 is an end view of a confocal spinning disk assembly being part of the microscope of Figure 1, the confocal spinning disk assembly being shown with its spinning disk intersecting the optical path of the microscope;
Figure 6 is an end view of a confocal spinning disk assembly being part of the microscope of Figure 1, the confocal spinning disk assembly being shown with its spinning disk not intersecting the optical path of the microscope; and
Figure 7 is a close up view of an embodiment including a multi-well plate.

### Detailed Description of the Drawings

Referring now to the drawings there is shown, generally indicated as 100, a microscope embodying one aspect of the invention. The microscope 100 is an optical microscope, and in the preferred embodiment is a spinning disk confocal microscope, although microscopes embodying the invention may be of other types as would be apparent to a skilled person.

The microscope 100 includes a stage 20 for receiving an object 55 to be imaged. The object 55 typically comprises a slide 9 on which a specimen, for example a biological specimen, is located. The specimen (which may also be referred to as a sample) may be immersed in a medium, e.g. water. A cover slide 8 may be placed over the specimen, as required. The object 55 is located in an object plane 56. As is described in more detail hereinafter, the microscope 100 includes an illumination source 60 for illuminating the object 55. Typically, the illumination source 60 is positioned such that it illuminates the object from behind the stage 20 with respect to the object 55, i.e. through an aperture in the stage 20 and through the slide 9 in this example, and as such the slide 9 is formed from optically transparent material, e.g. glass.

The microscope 100 includes an imaging optical system 30 for imaging the object 55 to an imaging device, which typically comprises a camera 14, along an optical path. In preferred embodiments, it is desired that the imaging optical system 30 focuses an image of the object 55 at a focal plane of the camera 14. The imaging optical system 30 comprises a train of optical devices, typically comprising at least one lens and optionally at least one mirror, arranged to image the object 55 to the camera 14, i.e. form an image of the object 55 at the camera 14 via the optical train. The imaging optical system 30 comprises a microscope objective 7, preferably an infinity-corrected microscope objective. Advantageously, the objective 7 is a standard microscope objective, and does not have an embedded phase plate. The objective 7 has a back focal plane BFP, which is a pupil plane of the objective 7. The objective 7 has an optical axis that is typically perpendicular with the object plane 56.

The preferred imaging optical system 30 also comprises a tube lens 10, configured to form, together with the objective 7 (in particular the objective lens or objective lens assembly 7' included in the objective 7), an intermediate image of the object 55 at an intermediate image plane IIP. In preferred embodiments, a confocal spinning pinhole disk 11 is located in the intermediate image plane IIP, intersecting the optical path. Optionally, a mirror 19 is provided between the objective 7 and the tube lens 10, and is configured to cause an excitation beam 65 to be correctly aligned to the optical axis of the objective 7.

The preferred imaging optical system 30 includes an optical relay comprising at least one relay lens. The optical relay is located between the tube lens 10 and the camera 14 and is configured to project the intermediate image of the object 55 from the intermediate image plane IIP to the camera 14. In the illustrated embodiment, the optical relay comprises first and second relay lenses 13, 13' between the tube lens 10 and the camera 14. Optionally, a mirror 21 is provided between the relay lenses 13, 13', the mirror 21 being configured to cause light beams to be optimally aligned to the optical axis of the second relay lens 13'. In alternative embodiments (not illustrated) the imaging optical system may include any other suitable arrangement of lenses and, if required, mirror(s).

In preferred embodiments, the camera 14 is a digital camera having a digital image sensor 22, for example a CCD sensor. The imaging optical system 30 images the object 55 to the image sensor 22. More particularly, it is desired that the imaging optical system 30 focuses an image of the object 55 on the sensor 22 (wherein the image sensing surface of the sensor 22 is located at the focal plane of the imaging optical system 30).

The microscope 100 includes a focus adjustment system 35 for adjusting the imaging optical system 30 and/or the stage 20 in order to focus an image of the object 55 at the camera 14. The focus adjustment system 35 comprises means for effecting relative movement between the stage 20 and the objective 7 in an axial direction that corresponds to the optical axis of the objective 7. In typical embodiments, the objective 7 is movable with respect to the stage 20, and therefore the object 55, in the axial direction. To this end, the objective 7 is carried by a movable support structure 15, typically an objective turret. In the illustrated embodiment, the turret 15, and therefore the objective 7, is movable in the direction indicated by arrows A-A'. The turret 15 may include, or be coupled to, a drive system (not shown), for example a motorised drive system or a piezo-electric drive system, for moving the turret 15 in the direction A-A'. Any suitable conventional motorised drive system may be used. Movement of the objective 7 towards and away from the object 55 in the axial direction adjusts the focus of the image at the camera 14. As such the movable objective assembly 7, 15 provides part of the focusing system 35. Typically, the stage 20 is stationary during focusing and the objective 7 moves relative to it. Alternatively, the stage 20 may be moved axially with respect to the objective 7, in which case the objective 7 may be held stationary during focusing. More generally, either one or both of the objective 7 and the stage 20 may be movable axially towards and away from one another to adjust the focus.

The focus adjustment system 35 also includes a controller 50 for controlling movement of the objective 7 (and/or of the stage 20 as applicable) in order to focus the image at the camera 14. The controller 50 may take any conventional form, typically comprising a suitably programmed processor, e.g. a microprocessor or microcontroller. The focus adjustment system 35 is preferably configured to perform autofocusing of the image at the camera 14. To this end, the camera 14 and/or the microscope 100 may include any conventional autofocusing means. For example, the controller 50 may be programmed to perform contrast detection autofocusing using any conventional contrast detection autofocusing algorithm.

In some embodiments, the microscope 100 includes an irradiation optical system 45 for irradiating the object 55, and in particular the specimen included in the object 55. The irradiation optical system 45 comprises a light source 25, which in preferred embodiments comprises one or more laser devices, but may alternatively comprise any other suitable conventional light source, for example one or more LEDs, or one or more incandescent bulb. The light source 25 may be configured to produce light in one or more frequency bands as suits the application and as would be apparent to a skilled person. For example, in cases where the object 55 comprises a specimen that is capable of fluorescence (either because it is inherently capable of fluorescence, i.e. auto-fluorescence, or because one or more fluorescent markers (e.g. proteins or dyes) have been added to the specimen), the light source 25 may be configured to provide light in one or more frequency bands that excites the specimen/markers and causes fluorescence. In preferred embodiments, the irradiation optical system 45 is configured to irradiate the object 55 by directing light (laser beam 65 in the present example, which may comprise light at any one or more of a plurality of wavelengths corresponding to the fluorescence characteristics of the specimen/markers) to the object along at least part of the optical path defined by the imaging optical system 30. In particular, the irradiation optical system 45 is configured to irradiate the object 55 through the objective 7. To facilitate this, a beam splitter 12 may be included in the imaging optical system 30. The beam splitter 12 is configured to be transmissive to light in one or more frequency bands corresponding to the light produced by the laser device 25. The laser device 25 is arranged to direct the laser beam 65 through the beam splitter 12 and onto the optical path whereupon it is directed to the object 55 through the objective 7. The beam splitter 12 is configured to be reflective (or at least partly reflective) to light in one or more frequency band corresponding to light that is reflected from, or emitted from, the object 55. The beam splitter 12 may be said to have one or more reflection band corresponding to light that is emitted from, the object 55, and a transmission band corresponding to the light produced by the laser device 25. In the illustrated embodiment, the beam splitter 12 is located between the tube lens 10 and the first relay lens 13, and arranged to reflect light that passes through the tube lens 10 to the first relay lens 13. The beam splitter 12 is located between the intermediate image plane and the optical relay. Typically, the beam splitter 12 comprises a dichroic mirror. In alternative embodiments, the beam splitter 12 may be replaced by a simple mirror, for example in embodiments where the laser device 25 is not required.

In the illustrated embodiment, the microscope 100 may perform spinning disk confocal laser microscopy and the irradiation optical system 45 includes confocal spinning disk 11 onto which the laser beam 65 is directed. The spinning disk 11 includes an array of pinholes (not shown) and may be part of a spinning disk assembly that includes a corresponding spinning illumination beam collector disk (not shown) with microlenses. In preferred embodiments, the diameter of the pinholes does not exceed 2 Airy units. The spinning disk 11, or spinning disk assembly, acts as a scanner and causes the object 55 to be irradiated with an array of laser beams produced from the laser beam 65. The spinning disk 11 is preferably located at the intermediate image plane IIP. In the illustrated embodiment, the spinning disk 11 is located between the tube lens 10 and the beam splitter 12.

In preferred embodiments, the spinning disk 11 (or spinning disk assembly as applicable) is movable between a use state, in which the spinning disk 11 (or spinning disk assembly as applicable), including the pinhole array, is in the intermediate image plane and intersects the imaging and illumination field area, i.e. is located in the optical path of the imaging system 30 and irradiation system 45, and a non-use state in which the spinning disk 11 (or spinning disk assembly as applicable) does not intersect the imaging and illumination field area, i.e. is not located in the optical path of the imaging system 30 or irradiation system 45, and is preferably also removed from the intermediate image plane. With the spinning disk 11 (or spinning disk assembly) in the use state, the microscope 100 is in a confocal mode in which it may perform spinning disk confocal laser microscopy. When the spinning disk 11 (or spinning disk assembly) is in the non-use state, the microscope 100 may perform other types of microscopy, including differential phase contrast microscopy, brightfield microscopy or epifluorescence microscopy.

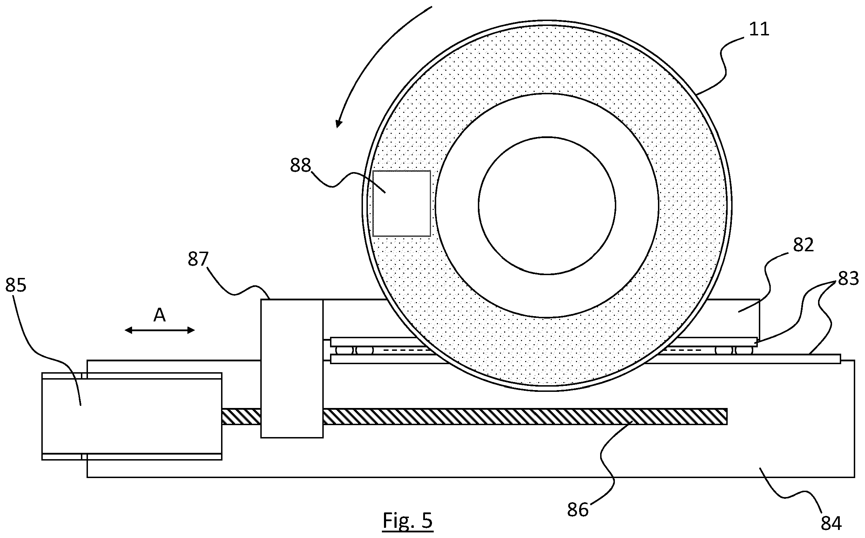

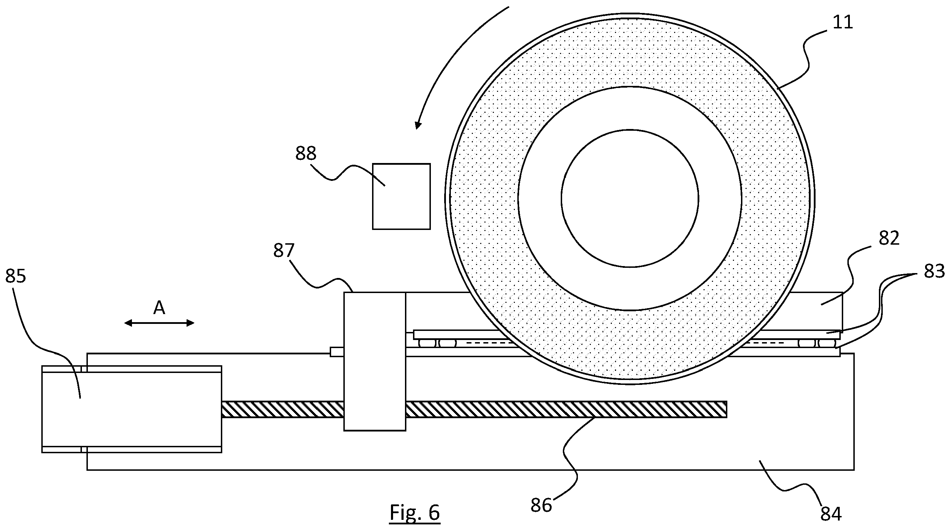

The spinning disk 11, or spinning disk assembly as applicable, may be movable between the use and non-use states by any convenient conveyancing mechanism, preferably under control of the controller 50. Figures 5 and 6 show an example of a suitable conveyancing mechanism comprising a carriage 82 movably coupled to a base 84. In the illustrated example, the carriage 82 is coupled to the base 84 by a linear slide mechanism 83 that allows the spinning disk 11 to move with respect to the base 84 in the direction indicated by arrow A. In Figure 5, the spinning disk 11 is in the use state in which it intersects with the imaging and illumination field area 88. In Figure 6, the spinning disk 11 is in the non-use state in which it does not intersect with the imaging and illumination field area 88. Preferably, a drive mechanism is provided for moving the carriage 82 with respect to the base 84. The illustrated drive mechanism comprises a motor 85 and a lead screw 86 provided at the base 84, the lead screw 86 being coupled to the carriage 82 by a lead screw coupler 87. It will be understood that the conveyancing mechanism and/or the drive mechanism may take any other convenient conventional form.

In alternative embodiments in which the microscope 100 does not support confocal spinning disk microscopy, the spinning disk 11 may be omitted. In embodiments in which the microscope uses laser scanning to irradiate the object 55, any other conventional laser scanning system may be provided.

In some embodiments, the object 55 includes a specimen that fluoresces (either by auto-fluorescence or by means of fluorescent markers (or labels) included in the specimen) when excited by the light from the irradiation optical system 45. Therefore, when the microscope 100 operates in an imaging mode, it is fluorescent light emitted from the specimen that is imaged by the imaging optical system 30 to the camera 14.

The microscope 100 includes an aperture stop, in the preferred form of an iris device 70, in the optical imaging system 30 and configured to act as a spatial filter. The iris device 70 defines an aperture 71 and is operable to adjust the size, or diameter, of the aperture 71. Conveniently, the iris device is controlled by the controller 50. The iris device 70 may be of any conventional type. The iris device 70, or spatial filter, is located in a conjugate plane BFP' of the back focal plane BFP of the objective 7. In the preferred embodiment, the relay lens 13, together with the tube lens 10, re-images the back focal plane BFP to its conjugate plane BFP'. The BFP is a pupil plane of the objective 7 and so the re-imaged BFP' may be said to be a re-imaged pupil plane of the objective. In general, any suitable arrangement of lens(es) may be provided to re-image the BFP to its conjugate BFP'. In preferred embodiments, the BFP' is located one focal length from each of the relay lenses 13, 13'. It is also preferred that the relay lens 13 is at least one focal length away from the IIP. The precise location of the BFP' may be tuned in any convenient manner, for example by providing a suitable field lens (not shown), e.g. a field lens with a desired focal length, between the tube lens10 and the relay lens 13. Advantageously, the arrangement is such that the conjugate back focal plane BFP' is located in the optical train outside of the objective 7 and is accessible such that the iris device 70 can be positioned to intersect it. The iris device 70 is positioned such that the aperture 71 is aligned with the axis of the optical path, in particular the optical axis of the relay lens 13 as illustrated, i.e. such that the axis passed through the aperture.

The iris device 70, and in particular the aperture 71, acts as a spatial filter, and may be referred to as a pupil plane spatial filter. The iris device 70 may be configured to act as a spatial filter by setting the size of the aperture 71. The size of the aperture 71 may be set to be less than or equal to the size of a pupil projected from the back focal plane BFP and re-imaged to the conjugate back focal plane BFP'. In particular, the size (e.g. width, or diameter) of the aperture 71 is preferably set to be less than or equal to the size (e.g. width, or diameter) of a pupil projected from the objective BFP and re-imaged by the relay lens 13 when the object 55 is illuminated by the illumination source 60 using its full illumination field, i.e. brightfield illumination. In alternative embodiments (not illustrated) any other spatial filter device with an adjustable aperture size may be used in place of the iris device 70.

The size of the aperture 71 may be selected or adjusted to match the illumination-angle constraints in embodiments where the object is provided in a multi-well plate. Preferably, the size of the aperture 71 is adaptable to suit the NA and magnification combination of the microscope 100, that is selected by the user in any convenient normal manner. The size of the aperture 71 may be adjusted automatically by the controller 50 in response to changes in the set up of the objective 7 and/or tube lens 10.

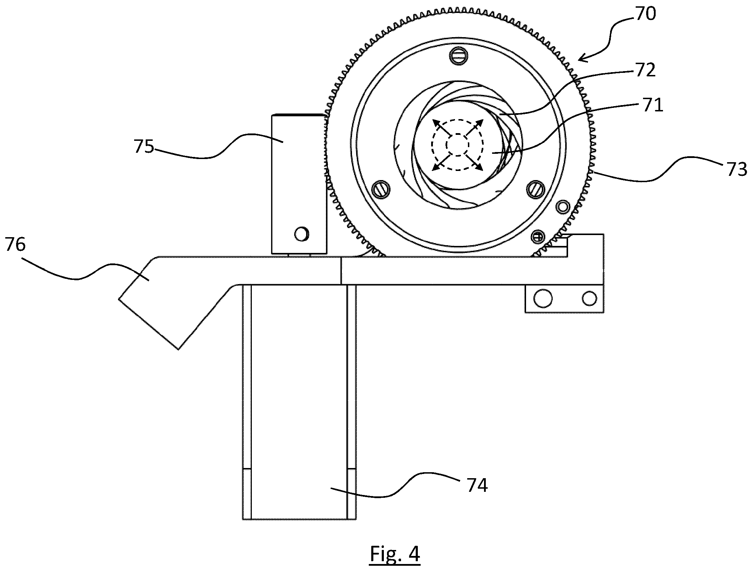

Figure 4 shows an end view of a variable iris assembly including an exemplary variable iris device 70 with an iris shutter 72 that is operable to control the size of the aperture 71. In this example the shutter 72 is operable by a ring gear drive 73 which is driven by a motor 74 via a worm gear 75. The iris device 70, motor 74 and worm gear 75 are conveniently carried by a common support structure 76. The motor 74 may be controlled by the controller 50.

The illumination source 60 is configurable to deliver light to the object 55 from any one of a plurality of locations that are angularly displaced about an axis that is perpendicular to the object plane 56 (which axis is typically coincident with the objective axis). As such, the illumination source 60 is operable to illuminate the object 55 obliquely from different locations in order that differential phase microscopy can be performed. The different locations are angularly displaced around an axis that is perpendicular to the object plane. The preferred illumination source 60 is a multi-zone configurable light source, and may be referred to as a split field illumination source, in which the overall illumination field of the illumination source 60 can be split or partitioned spatially so that the illumination source 60 may provide light from different zones or regions of the illumination field. As a result, the illumination source 60 is configurable to illuminate the object 55 from any one of a plurality of different azimuth angles with respect to the object plane and its perpendicular axis.

Advantageously, the distance between the illumination source 60 and the object 55 can be set arbitrarily (e.g. to balance the needs of light efficiency and object accessibility). In preferred embodiments, the distance between the illumination source 60 and the object 55 is relatively long to facilitate user access to the sample area 20, 55. Optionally, the illumination source 60 is located at an optically long distance from the object plane 56, i.e. effectively or substantially located at optical infinity such that there is a minimal (e.g. +/- 10 mm or less) axial variation in pupil position at the iris, i.e. to simulate the illumination source being located at infinity. This is facilitated by the illumination source 60 not including a condenser in preferred embodiments. The apparatus 100 may include any convenient means (not illustrated) for moving the illumination source 60 with respect to the stage 20, e.g. a movable carriage for the illumination source 60 and/or for the stage 20, in order to adjust the distance between the illumination source 60 and the object plane 56. The carriage, or other moving means, may be manually movable and/or power operable by any convenient drive mechanism, preferably under control of the controller 50.

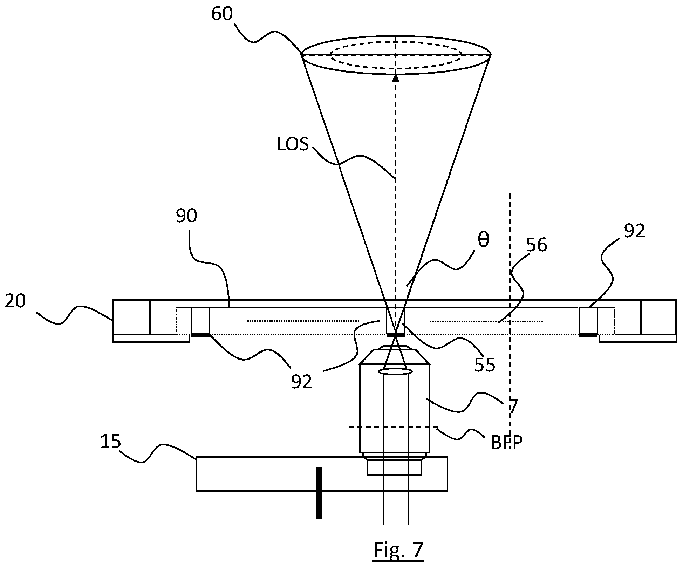

Another advantage of being able to set the distance between the illumination source 60 and the object 55 is that the distance can be set to suit instances where the object 55 comprises a specimen or other substance contained in a multiwell plate, also known as a microplate. Figure 7 shows the sample holder 20 holding a multiwell plate 90 that has a plurality of wells 92 for containing specimen samples. Illumination of the contents of each well 92 is affected by the dimensions of the well, in particular the size of its mouth, its depth, and the angle at which its sides extend from the mouth (typically the wells are cylindrical or cuboidal, but may be conical or may otherwise be shaped to become narrower in a direction away from the mouth). Typically the mouths of the wells 92 lie in a plane that is parallel with the object plane 56, and perpendicular to the (shortest) line of sight LOS between the illumination source 60 and the object 55. The angle θ (Figure 7) at which light from the illumination source 60 is incident at the mouth of each well 92 determines how effectively the light illuminates the contents of the well. The angle of incidence may depend not only on the distance of the illumination source 60 from the multiwell plate, but also on the width of the illumination source 60 in a direction perpendicular to the distance of the illumination source 60 from the multiwell plate, or along a plane parallel with the object 55. In preferred embodiments, when a multiwell plate is used, the configuration is such that the width of the illumination source (and in particular the width of its illumination field) is related to the perpendicular (shortest) distance between the illumination source 60 and the object 55 (in the multiwell plate) such that the angle of incidence at the object plane of light from the illumination source, preferably all light from the illumination source, i.e. from its lateral edges, is within a range of elevation angles (θ or less in the example of Figure 7) that allow the contents of the wells to be effectively illuminated. Typically, the angle of incidence is such that the light can reach the bottom of the wells, preferably without reflection from the sides.

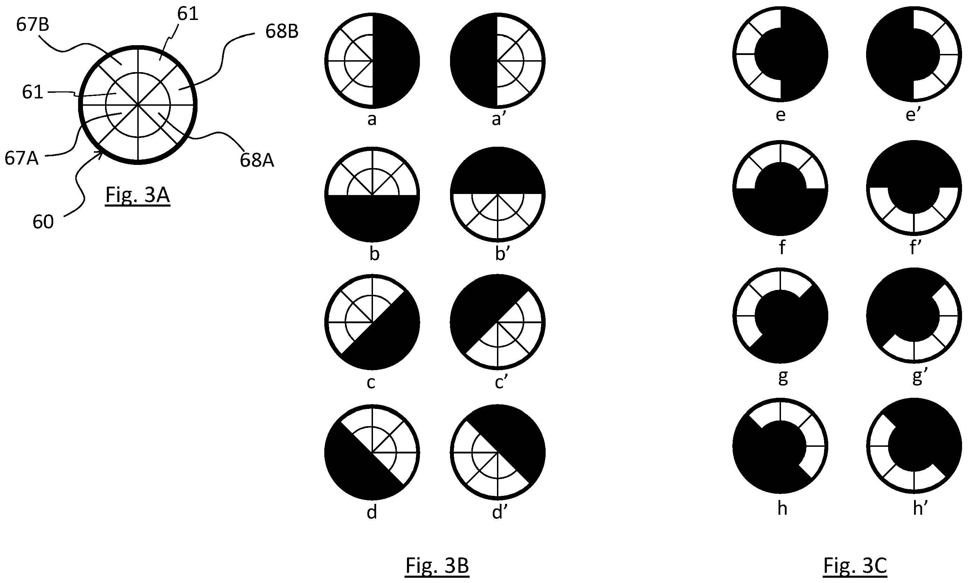

Figure 3A shows an end view of a preferred embodiment of the illumination source 60 which comprises multiple light sources 61 (e.g. LED units or lamps) arranged in an array and which may be selectively turned on or off, individually or in groups, in order to selectively partition the illumination field of the illumination source 60 so that the illumination source 60 may provide light from different regions or zones of the illumination field.

In the illustrated example the illumination field of the illumination source 60 comprises an inner central portion 67A surrounded by an outer annular portion 67B. The central portion 67A comprises a plurality angularly, or radially, spaced segments 68A (8 segments in this example). The outer portion 67B comprises a plurality of angularly, or radially, spaced segments 68B (8 in this example). In Figure 3A, the illumination source 60 is shown with all segments illuminated, which corresponds to brightfield illumination. Conveniently, each segment 68A, 68B corresponds to a respective light source 61, or multiple light sources as is convenient..

In preferred embodiments, the illumination field of the illumination source 60 is partitioned into 2N diametrically opposed semi-circular regions, where integer N ≥ 1. Optionally, each semi-circular region is partitioned into 2M concentric annular regions, where integer M ≥ 1.

The ability to selectively partition the illumination field of the illumination source 60 is advantageous in that it allows the spatial frequency response of the imaging system to be tuned, which allows optimisation for feature sharpness.

Figure 3B shows eight example configurations of the illumination field of the illumination source 60. In each configuration, the segments 68A, 68B are configured such that only half of the available illumination field transmits light. The illumination field is circular in this example and so each half is semi-circular. The illustrated configurations are arranged in pairs, a-a', b-b', c-c', d-d', wherein in each pair the transmitting half of one configuration is angularly displaced by 180° with respect to the other configuration about the centre point of the illumination field, i.e. the configurations of each pair are mirror images of each other. Moreover the configurations of pairs b-b', c-c' and d-d' are angularly displaced with respect to the configurations of pair a-a' by 90°, 45° and 135°, respectively. Accordingly, in Figure 3B, the illumination source 60 is shown implementing four pairs of angularly displaced semi-circular split illumination configurations. Each illumination configuration illuminates the object 55 from a different illumination angle.

Figure 3C shows a further eight example configurations of the illumination source 60. In each configuration, the segments 68A, 68B are configured such that only an annular portion of the available illumination field transmits light. The illustrated configurations are arranged in pairs, e'-e', f-f', g-g', h-h', wherein in each pair the annular transmit portion is angularly displaced by 180° with respect to the other configuration about the centre point of the illumination field, i.e. the configurations of each pair are mirror images of each other. Moreover the configurations of pairs f-f', g-g' and h-h' are angularly displaced with respect to the configurations of pair e-e' by 90°, 45° and 135°, respectively. Accordingly, in Figure 3C, the illumination source 60 is shown implementing four pairs of angularly displaced annular split illumination configurations. Each illumination configuration illuminates the object 55 from a different illumination angle.

Accordingly, by configuration of its light sources 61, the illumination source 60 is configurable to provide light from different zones or regions of its illumination field. The centre point of the illumination field is located on an axis that is perpendicular with the object plane 56. As such, the different zones or regions of the illumination field are angularly displaced about an axis that is perpendicular to the object plane 56. It may therefore be said that the illumination source 60 is configurable to illuminate the object 55 from any one of a plurality of different azimuth angles with respect to the object plane and its perpendicular axis.

In preferred embodiments, the illumination source 60 is controlled by the controller 50 in order to determine how its illumination field is partitioned, i.e. which segment(s) or region(s) are illuminated and which are not, and so to determine how the object 55 is illuminated. Optionally, in embodiments where each segment or region of the illumination field corresponds with a respective controllable light source 61, the controller 50 may be configured to adjust the intensity of the light sources, optionally including turning each light source on or off as required. The illumination source 60 may also be turned off or otherwise disabled when the microscope 100 is not performing differential phase contrast microscopy, e.g. in the confocal microscopy mode.

In preferred embodiments, to perform DPC microscopy, the object 55 is illuminated using one or more pairs of 180° angularly displaced illumination configurations in sequence, e.g. one or more of the configuration pairs a-a', b-b', c-c', d-d', e-e', f-f', g-g', h-h' may be used, with the individual configurations of each pair being used in sequence, e.g. b followed by b', and so on. As such, the object 55 is illuminated in sequence by angularly displaced zones of the light source 60. Accordingly, the object 55 is illuminated from a respective different illumination angle (which may be referred to as an azimuth illumination angle) depending on the configuration of the light source 60.

As a result the object 55 is illuminated in sequence from two or more different azimuth angles, preferably one or more pairs of 180° displaced azimuth angles.

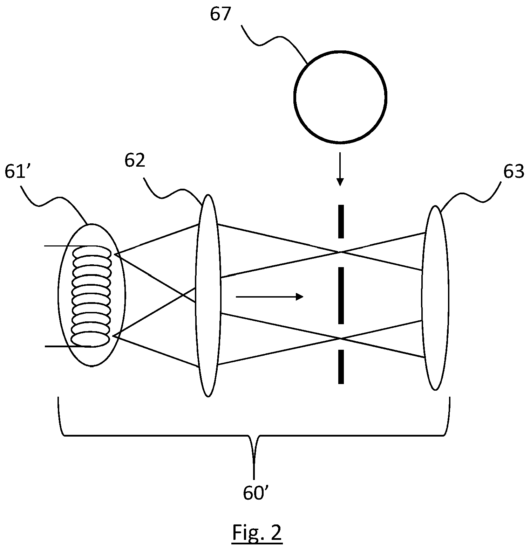

Figure 2 shows an alternative illumination source 60' comprising a light source 61' and a spatial light modulator 67. The spatial light modulator 67, which may be of any conventional type, is located between the light source 60' and the object 55, and is configurable to selectively block or mask some of the light emanating from the light source 61' in order control how the object 55 is illuminated by the illumination source 60', including controlling the angle at which the object 55 is illuminated. As such, the spatial light modulator device 67 selectively partitions the illumination field of the illumination source 60' by masking or blocking one or more regions or segments of the illumination field. In preferred embodiments, the illumination source 60' is also operable in a brightfield mode in which it provides brightfield illumination to the object 55. The light source 61' may comprise any conventional light source, for example one or more incandescent bulb, or one or more LEDs. Optionally, a collector lens 62 is located between the light source 61' and the spatial light modulator device 67. Optionally, a condenser lens 63 is located between the spatial light modulator device 67 and the object 55.

The invention is not limited to the embodiment(s) described herein but can be amended or modified without departing from the scope of the present invention as defined by the appended claims.

## Claims

1. A microscope (100) for imaging an object (55) located in an object plane (56), the microscope comprising:
an illumination source (60);
an imaging optical system (30) configured to image said object along an optical path to an imaging device (14), wherein said imaging optical system comprises:
an infinity-corrected microscope objective (7) and a tube lens (10);
at least one lens (13) configured to image a back focal plane (BFP) of said microscope objective (7) to a conjugate back focal plane (BFP') outside of said microscope objective (7);
**characterized by** an aperture stop (70) located at said conjugate back focal plane (BFP') and intersecting said optical path,
wherein said object plane (56) is located between said objective (7) and said illumination source (60),
and wherein said illumination source (60) is configurable to illuminate said object (55) from any one of a plurality of locations that are angularly displaced about an axis that is perpendicular to the object plane (56), wherein said aperture stop (70) defines an aperture (71) and is operable to adjust the size of the aperture (71).

2. The microscope (100) of claim 1, wherein said microscope objective (7) and said tube lens (10) are configured to image said object (55) to an intermediate image plane (IIP), and wherein said at least one lens (13) comprises an optical relay configured to project an image of said object from said intermediate image plane to said imaging device (14), and to image said back focal plane (BFP) of said objective to said conjugate back focal plane (BFP'), and wherein said optical relay comprises first and second relay lenses (13, 13') spaced apart along the optical path, said first relay lens (13) being configured to image said back focal plane of said objective to said conjugate back focal plane, the conjugate back focal plane being located between said first and second relay lenses.

3. The microscope (100) of any preceding claim, wherein said illumination source (60) is operable to illuminate said object (55) using a sequence of two or more illumination configurations (a - h'), wherein in each illumination configuration said illumination source illuminates said object from a respective different illumination angle, and wherein said sequence of illumination configurations comprises one or more pair (a, a' - h, h') of illumination configurations, wherein the illumination configurations of each pair are used in sequence and cause the illumination source to illuminate said object from a respective illumination angle that is angularly displaced by 180° with respect to each other.

4. The microscope (100) of any preceding claim, wherein said illumination source (60) has a spatially partitionable illumination field for illuminating said object (55) from different angles with respect to the object plane (56).

5. The microscope (100) of any preceding claim, wherein the illumination source (60) has an illumination field and comprises an array of light sources that are controllable individually, and/or as two or more groups, in order to selectively illuminate one or more of a plurality of zones of the illumination field.

6. The microscope (100) of any preceding claim, wherein the illumination source (60) has an illumination field and is operable to illuminate said object (55) using a sequence of spatially displaced zones of the illumination field.

7. The microscope (100) as claimed in any preceding claim, wherein said illumination source (60) is located at a distance from said object plane (56) that corresponds with, or substantially corresponds with, optical infinity.

8. The microscope (100) of any preceding claim, further including means for adjusting the distance between said illumination source (60) and said object plane (56).

9. The microscope (100) of any preceding claim, including an irradiation optical system (45) comprising a light source (25) and being configured to irradiate said object (55) by directing light from said light source to the object along at least part of said optical path through said objective (7).

10. The microscope (100) system of claim 9, wherein said irradiation optical system (45) comprises a confocal spinning disk (11), and said light source (25) comprises at least one laser device arranged to direct a laser beam (65) onto said confocal spinning disk, and wherein said confocal spinning disk is movable between a use state in which it intersects said optical path, and a non-use state in which it does not intersect said optical path, and wherein said microscope objective (7) and said tube lens (10) are configured to image said object (55) to an intermediate image plane (IIP), and in said use state, said confocal spinning disk is located in said intermediate image plane.

11. The microscope (100) of claim 10, further including a conveyancing mechanism (82) for moving said confocal spinning disk (11) between said use state and said non-use state.

12. The microscope (100) of claim 10 or 11, wherein said confocal spinning disk (11) is included in a spinning disk assembly, said spinning disk assembly being movable between said use state and said non-use state.

13. The microscope (100) of any preceding claim wherein said aperture stop (70) is configured to act as a spatial filter.

14. The microscope (100) of any preceding claim, wherein said aperture stop (70) comprises an iris device defining said aperture (71) and is operable to adjust the size of the aperture, and wherein said iris device is located in said conjugate back focal plane (BFP'), and is positioned such that the aperture intersects said optical path.

## Patentansprüche

1. Mikroskop (100) zum Abbilden eines Objekts (55), das sich in einer Objektebene (56) befindet, wobei das Mikroskop Folgendes umfasst:
eine Beleuchtungsquelle (60);
ein optisches Abbildungssystem (30), das so konfiguriert ist, dass es das Objekt entlang eines optischen Verlaufs zu einer Abbildungsvorrichtung (14) abbildet, wobei das optische Abbildungssystem Folgendes umfasst:
ein unendlich korrigiertes Mikroskopobjektiv (7) und eine Tubuslinse (10);
mindestens eine Linse (13), die so konfiguriert ist, dass sie eine hintere Brennebene (BFP) des Mikroskopobjektivs (7) auf eine konjugierte hintere Brennebene (BFP') außerhalb des Mikroskopobjektivs (7) abbildet;
**gekennzeichnet durch** eine Aperturblende (70), die sich in der konjugierten hinteren Brennebene (BFP') befindet und den optischen Verlauf schneidet,
wobei sich die Objektebene (56) zwischen dem Objektiv (7) und der Beleuchtungsquelle (60) befindet,
und wobei die Beleuchtungsquelle (60) so konfigurierbar ist, dass sie das Objekt (55) von einer beliebigen aus einer Vielzahl von Stellen aus beleuchtet, die um eine Achse, die senkrecht zu der Objektebene (56) ist, winkelversetzt sind, wobei die Aperturblende (70) eine Apertur (71) definiert und so betreibbar ist, dass sie die Größe der Apertur (71) anpasst.

2. Mikroskop (100) nach Anspruch 1, wobei das Mikroskopobjektiv (7) und die Tubuslinse (10) so konfiguriert sind, dass sie das Objekt (55) auf eine Zwischenbildebene (IIP) abbilden, und wobei die mindestens eine Linse (13) ein optisches Relais umfasst, das so konfiguriert ist, dass es ein Bild des Objekts von der Zwischenbildebene auf die Abbildungsvorrichtung (14) projiziert und die hintere Brennebene (BFP) des Objektivs auf die konjugierte hintere Brennebene (BFP') abbildet, und wobei das optische Relais eine erste und eine zweite Relaislinse (13, 13') umfasst, die entlang des optischen Verlaufs beabstandet sind, wobei die erste Relaislinse (13) so konfiguriert ist, dass sie die hintere Brennebene des Objektivs auf die konjugierte hintere Brennebene abbildet, wobei sich die konjugierte hintere Brennebene zwischen der ersten und der zweiten Relaislinse befindet.

3. Mikroskop (100) nach einem der vorhergehenden Ansprüche, wobei die Beleuchtungsquelle (60) so betreibbar ist, dass sie das Objekt (55) mithilfe einer Folge von zwei oder mehr Beleuchtungskonfigurationen (a - h') beleuchtet, wobei die Beleuchtungsquelle in jeder Beleuchtungskonfiguration das Objekt aus einem jeweils unterschiedlichen Beleuchtungswinkel beleuchtet und wobei die Folge von Beleuchtungskonfigurationen ein oder mehrere Paare (a, a' - h, h') von Beleuchtungskonfigurationen umfasst, wobei die Beleuchtungskonfigurationen jedes Paares in Folge verwendet werden und die Beleuchtungsquelle dazu veranlassen, das Objekt aus einem jeweiligen Beleuchtungswinkel zu beleuchten, der in Bezug aufeinander um 180° winkelversetzt ist.

4. Mikroskop (100) nach einem der vorhergehenden Ansprüche, wobei die Beleuchtungsquelle (60) ein räumlich teilbares Beleuchtungsfeld aufweist, um das Objekt (55) aus verschiedenen Winkeln in Bezug auf die Objektebene (56) zu beleuchten.

5. Mikroskop (100) nach einem der vorhergehenden Ansprüche, wobei die Beleuchtungsquelle (60) ein Beleuchtungsfeld aufweist und ein Array von Lichtquellen umfasst, die einzeln und/oder als zwei oder mehr Gruppen steuerbar sind, um eine oder mehrere von einer Vielzahl von Zonen des Beleuchtungsfeldes selektiv zu beleuchten.

6. Mikroskop (100) nach einem der vorhergehenden Ansprüche, wobei die Beleuchtungsquelle (60) ein Beleuchtungsfeld aufweist und so betreibbar ist, dass sie das Objekt (55) mithilfe einer Folge von räumlich versetzten Zonen des Beleuchtungsfeldes beleuchtet.

7. Mikroskop (100) nach einem der vorhergehenden Ansprüche, wobei sich die Beleuchtungsquelle (60) in einem Abstand von der Objektebene (56) befindet, der optischer Unendlichkeit entspricht oder im Wesentlichen entspricht.

8. Mikroskop (100) nach einem der vorhergehenden Ansprüche, das ferner Mittel zum Anpassen des Abstands zwischen der Beleuchtungsquelle (60) und der Objektebene (56) beinhaltet.

9. Mikroskop (100) nach einem der vorhergehenden Ansprüche, das ein optisches Bestrahlungssystem (45) beinhaltet, das eine Lichtquelle (25) umfasst und so konfiguriert ist, dass es das Objekt (55) bestrahlt, indem es Licht von der Lichtquelle entlang mindestens eines Teils des optischen Verlaufs durch das Objektiv (7) auf das Objekt lenkt.

10. Mikroskopsystem (100) nach Anspruch 9, wobei das optische Bestrahlungssystem (45) eine konfokale Drehscheibe (11) umfasst und die Lichtquelle (25) mindestens eine Laservorrichtung umfasst, die so angeordnet ist, dass sie einen Laserstrahl (65) auf die konfokale Drehscheibe richtet, und wobei die konfokale Drehscheibe zwischen einem Verwendungszustand, in dem sie den optischen Verlauf schneidet, und einem Nichtverwendungszustand, in dem sie den optischen Verlauf nicht schneidet, beweglich ist und wobei das Mikroskopobjektiv (7) und die Tubuslinse (10) so konfiguriert sind, dass sie das Objekt (55) auf eine Zwischenbildebene (IIP) abbilden, und wobei sich die konfokale Drehscheibe in dem Verwendungszustand in der Zwischenbildebene befindet.

11. Mikroskop (100) nach Anspruch 10, das ferner einen Transportmechanismus (82) beinhaltet, um die konfokale Drehscheibe (11) zwischen dem Verwendungszustand und dem Nichtverwendungszustand zu bewegen.

12. Mikroskop (100) nach Anspruch 10 oder 11, wobei die konfokale Drehscheibe (11) in einer Drehscheibenbaugruppe beinhaltet ist, wobei die Drehscheibenbaugruppe zwischen dem Verwendungszustand und dem Nichtverwendungszustand beweglich ist.

13. Mikroskop (100) nach einem der vorhergehenden Ansprüche, wobei die Aperturblende (70) so konfiguriert ist, dass sie als ein Raumfilter wirkt.

14. Mikroskop (100) nach einem der vorhergehenden Ansprüche, wobei die Aperturblende (70) eine Irisvorrichtung umfasst, die die Apertur (71) definiert und betreibbar ist, um die Größe der Apertur anzupassen, und wobei sich die Irisvorrichtung in der konjugierten hinteren Brennebene (BFP') befindet und derart positioniert ist, dass die Apertur den optischen Verlauf schneidet.

## Revendications

1. Microscope (100) destiné à former l'image d'un objet (55) situé dans un plan objet (56), le microscope comprenant :
une source d'éclairage (60) ;
un système optique d'imagerie (30) configuré pour former l'image dudit objet le long d'un trajet optique vers un dispositif d'imagerie (14), dans lequel ledit système optique d'imagerie comprend :
un objectif de microscope à correction infinie (7) et une lentille tubulaire (10) ;
au moins une lentille (13) configurée pour former l'image d'un plan focal arrière (BFP) dudit objectif de microscope (7) sur un plan focal arrière conjugué (BFP') à l'extérieur dudit objectif de microscope (7) ;
**caractérisé par** un diaphragme d'ouverture (70) situé au niveau dudit plan focal arrière conjugué (BFP') et coupant ledit trajet optique,
dans lequel ledit plan objet (56) est situé entre ledit objectif (7) et ladite source d'éclairage (60),
et dans lequel ladite source d'éclairage (60) est configurable pour éclairer ledit objet (55) à partir de l'un quelconque d'une pluralité d'emplacements qui sont déplacés angulairement autour d'un axe qui est perpendiculaire au plan objet (56), dans lequel ledit diaphragme d'ouverture (70) définit une ouverture (71) et peut être actionné pour ajuster la taille de l'ouverture (71).

2. Microscope (100) selon la revendication 1, dans lequel ledit objectif de microscope (7) et ladite lentille tubulaire (10) sont configurés pour former l'image dudit objet (55) sur un plan image intermédiaire (IIP), et dans lequel ladite au moins une lentille (13) comprend un relais optique configuré pour projeter une image dudit objet depuis ledit plan image intermédiaire vers ledit dispositif d'imagerie (14), et pour former l'image dudit plan focal arrière (BFP) dudit objectif vers ledit plan focal arrière conjugué (BFP'), et dans lequel ledit relais optique comprend des première et seconde lentilles de relais (13, 13') espacées le long du trajet optique, ladite première lentille de relais (13) étant configurée pour former l'image dudit plan focal arrière dudit objectif sur ledit plan focal arrière conjugué, le plan focal arrière conjugué étant situé entre lesdites première et seconde lentilles de relais.

3. Microscope (100) selon l'une quelconque des revendications précédentes, dans lequel ladite source d'éclairage (60) est apte à éclairer ledit objet (55) à l'aide d'une séquence de deux configurations d'éclairage ou plus (a - h'), dans lequel, dans chaque configuration d'éclairage, ladite source d'éclairage éclaire ledit objet à partir d'un angle d'éclairage différent respectif, et dans lequel ladite séquence de configurations d'éclairage comprend une ou plusieurs paires (a, a' - h, h') de configurations d'éclairage, et dans lequel les configurations d'éclairage de chaque paire sont utilisées en séquence et amènent la source d'éclairage à éclairer ledit objet à partir d'un angle d'éclairage respectif qui est décalé angulairement de 180° l'un par rapport à l'autre.

4. Microscope (100) selon l'une quelconque des revendications précédentes, dans lequel ladite source d'éclairage (60) présente un champ d'éclairage divisible dans l'espace pour éclairer ledit objet (55) sous différents angles par rapport au plan de l'objet (56).

5. Microscope (100) selon l'une quelconque des revendications précédentes, dans lequel la source d'éclairage (60) comporte un champ d'éclairage et comprend un réseau de sources lumineuses qui peuvent être commandées individuellement et/ou en deux ou plusieurs groupes, afin d'éclairer de manière sélective une ou plusieurs zones parmi une pluralité de zones du champ d'éclairage.

6. Microscope (100) selon l'une quelconque des revendications précédentes, dans lequel la source d'éclairage (60) comporte un champ d'éclairage et peut être actionnée pour éclairer ledit objet (55) à l'aide d'une séquence de zones spatialement décalées du champ d'éclairage.

7. Microscope (100) selon l'une quelconque des revendications précédentes, dans lequel ladite source d'éclairage (60) est située à une distance dudit plan objet (56) qui correspond, ou correspond sensiblement, à l'infini optique.

8. Microscope (100) selon l'une quelconque des revendications précédentes, comprenant en outre des moyens pour ajuster la distance entre ladite source d'éclairage (60) et ledit plan objet (56).

9. Microscope (100) selon l'une quelconque des revendications précédentes, comprenant un système optique d'irradiation (45) comprenant une source lumineuse (25) et étant configuré pour irradier ledit objet (55) en dirigeant la lumière provenant de ladite source lumineuse vers l'objet le long d'au moins une partie dudit trajet optique à travers ledit objectif (7).

10. Système de microscope (100) selon la revendication 9, dans lequel ledit système optique d'irradiation (45) comprend un disque rotatif confocal (11), et ladite source lumineuse (25) comprend au moins un dispositif laser agencé pour diriger un faisceau laser (65) sur ledit disque rotatif confocal, et dans lequel ledit disque rotatif confocal est mobile entre un état d'utilisation dans lequel il croise ledit trajet optique, et un état de non-utilisation dans lequel il ne croise pas ledit chemin optique, et dans lequel ledit objectif de microscope (7) et ladite lentille tubulaire (10) sont configurés pour former l'image dudit objet (55) sur un plan image intermédiaire (IIP), et dans ledit état d'utilisation, ledit disque rotatif confocal est situé dans ledit plan image intermédiaire.

11. Microscope (100) selon la revendication 10, comprenant en outre un mécanisme de transport (82) pour déplacer ledit disque rotatif confocal (11) entre ledit état d'utilisation et ledit état de non-utilisation.

12. Microscope (100) selon la revendication 10 ou 11, dans lequel ledit disque rotatif confocal (11) est inclus dans un ensemble de disques rotatifs, ledit ensemble de disques rotatifs étant mobile entre ledit état d'utilisation et ledit état de non-utilisation.

13. Microscope (100) selon l'une quelconque des revendications précédentes, dans lequel ledit diaphragme d'ouverture (70) est configuré pour agir comme un filtre spatial.

14. Microscope (100) selon l'une quelconque des revendications précédentes, dans lequel ledit diaphragme d'ouverture (70) comprend un dispositif à iris définissant ladite ouverture (71) et pouvant être actionné pour ajuster la taille de l'ouverture, et dans lequel ledit dispositif à iris est situé dans ledit plan focal arrière conjugué (BFP'), et est positionné de telle sorte que l'ouverture croise ledit chemin optique.
